(19) Europäisches Patentamt
European Patent Office
Office européen des brevets

(11) EP 2 729 523 B1

(12) **EUROPEAN PATENT SPECIFICATION**

(45) Date of publication and mention of the grant of the patent:
**16.09.2015 Bulletin 2015/38**

(21) Application number: **12735753.1**

(22) Date of filing: **06.07.2012**

(51) Int Cl.:
***C08K 5/00*** *(2006.01)*

(86) International application number:
**PCT/US2012/045654**

(87) International publication number:
**WO 2013/006748 (10.01.2013 Gazette 2013/02)**

(54) **ETHYLENE-BASED POLYMERS COMPOSITIONS**

POLYMERZUSAMMENSETZUNGEN AUF ETHYLENBASIS

COMPOSITIONS DE POLYMÈRES À BASE D'ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2011 US 201161505225 P**

(43) Date of publication of application:
**14.05.2014 Bulletin 2014/20**

(73) Proprietors:
- **Dow Global Technologies LLC**
  **Midland, MI 48674 (US)**
- **Dow Brasil Indústria e Comércio de Produtos Químicos Ltda.**
  **04794-000 São Paulo SP (BR)**

(72) Inventors:
- **KAPUR, Mridula**
  **Lake Jackson, TX 77566 (US)**
- **MAZZOLA, Nicolas Cardoso**
  **13209460 Jundiai (BR)**

(74) Representative: **Boult Wade Tennant**
**Verulam Gardens**
**70 Gray's Inn Road**
**London WC1X 8BT (GB)**

(56) References cited:
**WO-A1-01/90113**
**WO-A1-2011/085731**
**WO-A2-02/062885**
**JP-A- 2004 538 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 729 523 B1

## Description

Due to their excellent mechanical properties, bimodal, Ziegler-Natta (Z-N) catalyzed, gas phase, high density polyethylene (HDPE) resins are used to fabricate pipes, films, and blow molded articles. In addition to mechanical properties, the resins need to have excellent processability, specifically high melt strength and good sag resistance, especially in large diameter pipe applications.

Melt strength directly effects several processing parameters, such as the following: bubble stability during a film fabrication process; thickness variation during a blown film fabrication process; parison formation during an extrusion blow molding process; resin sagging during profile extrusion; cell formation during a foaming process; and thickness distribution during a sheet / film thermoforming process. Melt strength can be enhanced by using resins with higher molecular weight, but such resins will generally require more robust equipment to process, and require more energy consumption, because they tend to generate higher extrusion pressure during an extrusion process.

The melt strength of "Z-N catalyzed" HDPE resins has been improved by post reactor resin modification. The resin is modified by use of oxygen, peroxide, azide or other cross linking agents. However, greater the level of film resin cross linking, greater the bubble stability, and lower the film mechanical properties, such as dart drop impact. In addition, it can be difficult to consistently control the level of resin cross linking, which hinders good quality control. Other "Z-N catalyzed" HDPE resins are azide coupled to achieve higher melt strength and improved sag resistance. However, this is an expensive approach, and higher levels of azide coupling typically result in polymer melt fracture issues. Modified ethylene based polymers using alkoxy amine derivatives are described in U.S. Publication 2011/0171407 and International Publication 2011/085371. See also, R. Scaffaro et al., Polymer Degradation and Stability, 91, 2006, 3110-3116; R. Scaffaro et al., European Polymer Journal, 43, 2007, 2947-2955; F.P. La Mantia, Macromolecular Materials and Engineering, 2005, 290, 970-975; F.P. La Mantia, Macromolecular Rapid Communications, 2005, 26, 361-364; and U.S. Publication 2008/0146740.

WO-A-02/062885 discloses polymeric articles containing at least one polymeric material and a sufficient amount of at least one monomeric or oligomeric hindered amine light stabiliser to inhibit at least one of photo- or thermal-degradation.

JP-A-2004/538340 discloses a polymeric article which comprises at least one hindered amine light stabilizer to inhibit photo- and/or thermal degradation.

Therefore, there remains a need for new ethylene-based resins to provide an acceptable combination of physical properties and ease of processing. These needs and others have been met by the following invention.

## SUMMARY OF INVENTION

The invention provides a first composition comprising at least the following:

A) a first ethylene-based polymer;
B) one or more antioxidants, present in an amount greater than 1000 ppm, based on the weight of the first composition; and
C) an "oxy amine"-containing compound wherein the "oxy amine"-containing compound is selected from the compounds represented by Formula 1:

$$(R_1)(R_2)N\text{-}O\text{-}R_3 \qquad \text{(Formula 1)},$$

wherein $R_1$ and $R_2$ are each, independently of one another, a hydrogen, a $C_4$-$C_{42}$ alkyl, a $C_4$-$C_{42}$ aryl, or a substituted hydrocarbon groups comprising O and/or N, and where $R_1$ and $R_2$ may form a ring structure together; and $R_3$ is hydrogen, a hydrocarbon, or a substituted hydrocarbon group comprising O and/or N.

## BRIEF DESCRIPTION OF THE DRAWINGS

Figure 1 is a plot of Comparative 1 and Inventive 1, 2 and 3 composition molecular weight distributions (MWD).
Figure 2 is a plot of Comparative 1 and Inventive 4, 5 and 6 composition molecular weight distributions (MWD).
Figure 3 is a plot of Comparative 2 and Inventive 7, 8 and 9 composition molecular weight distributions (MWD).
Figure 4 is a comparison of the Comparative 1 and Inventive 1, 2 and 3 composition melt strength measured at 190°C.
Figure 5 is a comparison of the Comparative 1 and Inventive 4, 5 and 6 composition melt strength measured 190°C.
Figure 6 is a comparison of the Comparative 2 and Inventive 7, 8 and 9 compositions melt strength measured 190°C.

Figure 7 is the Comparative 1 and Inventive 1, 2 and 3 composition "melt viscosity (η*) versus frequency" plot at 190°C.
Figure 8 is the Comparative 1 and Inventive 4, 5 and 6 composition "melt viscosity (η*) versus frequency" plot at 190°C.
Figure 9 is the Comparative 2 and Inventive 7, 8 and 9 composition "melt viscosity (η*) versus frequency" plot at 190°C.
Figure 10 is the Comparative 1 and Inventive 1, 2 and 3 composition "tan delta versus frequency" plot at 190°C.
Figure 11 is the Comparative 1 and Inventive 4, 5 and 6 composition "tan delta versus frequency" plot at 190°C.
Figure 12 is the Comparative 2 and Inventive 7, 8 and 9 composition "tan delta versus frequency" plot at 190°C.
Figure 13 is the Comparative 1 and Inventive 1, 2 and 3 composition "storage modulus (G') versus frequency" plot at 190°C.
Figure 14 is the Comparative 1 and Inventive 4, 5 and 6 composition "storage modulus (G') versus frequency" plot at 190°C.
Figure 15 is the Comparative 2 and Inventive 7, 8 and 9 composition "storage modulus (G') versus frequency" plot at 190°C.

## DETAILED DESCRIPTION OF THE INVENTION

As discussed above, the invention provides a first composition comprising at least the following:

A) a first ethylene-based polymer;
B) one or more antioxidants, present in an amount greater than 1000 ppm, based on the weight of the first composition; and
C) an "oxy amine"-containing compound wherein the "oxy amine"-containing compound is selected from the compounds represented by Formula 1:

$$(R_1)\ (R_2)N\text{-}O\text{-}R_3 \qquad \text{(Formula 1)},$$

wherein $R_1$ and $R_2$ are each, independently of one another, a hydrogen, a $C_4$-$C_{42}$ alkyl, a $C_4$-$C_{42}$ aryl, or a substituted hydrocarbon groups comprising O and/or N, and where $R_1$ and $R_2$ may form a ring structure together; and $R_3$ is hydrogen, a hydrocarbon, or a substituted hydrocarbon group comprising O and/or N.

In one embodiment, Component B is present in an amount from greater than 1000 to 10,000 ppm, based on the weight of the first composition.

In one embodiment, Component B is present in an amount from greater than 1100 to 5,000 ppm, based on the weight of the first composition.

In one embodiment, Component B is present in an amount from greater than 1200 to 5,000 ppm, based on the weight of the first composition.

In one embodiment, Component C is present in an amount from 1 to 900 ppm, based on the weight of the first composition.

In one embodiment, Component C is present in an amount from 10 to 800 ppm, based on the weight of the first composition.

In one embodiment, Component C is present in an amount from 20 to 700 ppm, based on the weight of the first composition.

In one embodiment, Component C is present in an amount from 50 to 300 ppm, based on the weight of the first composition.

In one embodiment, the weight ratio of Component B to Component C is from 10 to 0.1.

In one embodiment, the alkoxy amine derivative is a hydroxylamine ester. In a further embodiment, the hydroxyl amine ester is "[9-(acetyloxy)-3,8,10-triethyl-7,8,10-trimethyl-1,5-dioxa-9-azaspiro[5.5]undec-3-yl]methyl octadecanoate."

In one embodiment, the ethylene-based polymer of Component A has a density greater than 0.94 g/cc (1 g/cc = 1 g/cm$^3$).

In one embodiment, the ethylene-based polymer of Component A has a melt index ($I_2$) from 0.05 to 10 g/10 min.

In one embodiment, the ethylene-based polymer of Component A has a melt index ($I_2$) from 0.05 to 5 g/10 min.

In one embodiment, the ethylene-based polymer of Component A has a melt index ($I_2$) from 0.05 to 1 g/10 min.

In one embodiment, the first ethylene-based polymer of Component A has a melt index ($I_5$) from 0.1 to 5 g/10 min.

In one embodiment, the ethylene-based polymer of Component A has a melt index ($I_5$) from 0.1 to 1 g/10 min.

The ethylene-based polymer of Component A may comprise a combination of two or more embodiments described herein.

In one embodiment, the first composition is produced by melt extruding a mixture of Components A, B and C at extruder temperatures less than 250°C.

In one embodiment, the first composition has melt strength at least 5 percent greater than the melt strength of a similar composition that does not contain Component C, an "oxy amine"-containing compound.

In one embodiment, the first composition has melt strength at least 10 percent greater than the melt strength of a similar composition that does not contain Component C, an "oxy amine"-containing compound.

In one embodiment, the first composition has melt strength at least 15 percent greater than the melt strength of a similar composition that does not contain Component C, an "oxy amine"-containing compound.

In one embodiment, the first composition viscosity at 0.1 radians/s, measured at 190°C, is at least 3 percent greater than the viscosity of a similar composition that does not contain Component C, an "oxy amine"-containing compound.

In one embodiment, the first composition viscosity at 0.1 radians/s, measured at 190°C, is at least 5 percent greater than the viscosity of a similar composition that does not contain Component C, an "oxy amine"-containing compound.

In one embodiment, the first composition viscosity at 0.1 radians/s, measured at 190°C, is at least 10 percent greater than the viscosity of a similar composition that does not contain Component C, an "oxy amine"-containing compound.

In one embodiment, the first composition viscosity at 0.1 radians/s, measured at 190°C, is at least 20 percent greater than the viscosity of a similar composition that does not contain Component C, an "oxy amine"-containing compound.

In one embodiment, the first composition viscosity at 0.1 radians/s, measured at 190°C, is at least 30 percent greater than the viscosity of a similar composition that does not contain Component C, an "oxy amine"-containing compound.

In one embodiment, the first composition viscosity at 0.1 radians/s, measured at 190°C, is at least 40 percent greater than the viscosity of a similar composition that does not contain Component C, an "oxy amine"-containing compound

In one embodiment, the first composition [(viscosity at 0.1 radians/s)/(viscosity at 100 radian/s)] viscosity ratio, measured at 190°C, is at least 3 percent greater than the viscosity ratio of a similar composition that does not contain Component C, an "oxy amine"-containing compound.

In one embodiment, the first composition [(viscosity at 0.1 radians/s)/(viscosity at 100 radian/s)] viscosity ratio, measured at 190°C, is at least 5 percent greater than the viscosity ratio of a similar composition that does not contain Component C, an "oxy amine"-containing compound.

In one embodiment, the first composition [(viscosity at 0.1 radians/s)/(viscosity at 100 radian/s)] viscosity ratio, measured at 190°C, is at least 10 percent greater than the viscosity ratio of a similar composition that does not contain Component C, an "oxy amine"-containing compound.

In one embodiment, the first composition [(viscosity at 0.1 radians/s)/(viscosity at 100 radian/s)] viscosity ratio, measured at 190°C, is at least 20 percent greater than the viscosity ratio of a similar composition that does not contain Component C, an "oxy amine"-containing compound.

In one embodiment, the first composition [(viscosity at 0.1 radians/s)/(viscosity at 100 radian/s)] viscosity ratio, measured at 190°C, is at least 30 percent greater than the viscosity ratio of a similar composition that does not contain Component C, an "oxy amine"-containing compound.

In one embodiment, the first composition [(viscosity at 0.1 radians/s)/(viscosity at 100 radian/s)] viscosity ratio, measured at 190°C, is at least 40 percent greater than the viscosity ratio of a similar composition that does not contain Component C, an "oxy amine"-containing compound.

In one embodiment, the first composition has a tan delta value (at 190°C) of at least 5 percent lower than the tan delta value of a similar composition that does not contain Component C, an "oxy amine"-containing compound.

In one embodiment, the first composition has a tan delta value (at 190°C) of at least 10 percent lower than the tan delta value of a similar composition that does not contain Component C, an "oxy amine"-containing compound.

In one embodiment, the first composition has a tan delta value (at 190°C) of at least 15 percent lower than the tan delta value of a similar composition that does not contain Component C, an "oxy amine"-containing compound.

In one embodiment, the first composition has a tan delta value (at 190°C) of at least 20 percent lower than the tan delta value of a similar composition that does not contain Component C, an "oxy amine"-containing compound.

In one embodiment, the first composition has a tan delta value (at 190°C) of at least 30 percent lower than the tan delta value of a similar composition that does not contain Component C, an "oxy amine"-containing compound.

In one embodiment, the first composition has a tan delta value (at 190°C) of at least 40 percent lower than the tan delta value of a similar composition that does not contain Component C, an "oxy amine"-containing compound.

The invention also provides a second composition comprising the first composition of any of the previous claims, and a second ethylene-based polymer.

In one embodiment, the second ethylene-based polymer is the same as the first ethylene-based polymer.

In one embodiment, Component C is present in an amount less than 900 ppm, based on the weight of the

second composition.

In one embodiment, the second composition has melt strength at least 5 percent greater than the melt strength of a similar composition that does not contain Component C, an "oxy amine"-containing compound.

In one embodiment, the second composition has melt strength at least 10 percent greater than the melt strength of a similar composition that does not contain Component C, an "oxy amine"-containing compound.

In one embodiment, the second composition has melt strength at least 15 percent greater than the melt strength of a similar composition that does not contain Component C, an "oxy amine"-containing compound.

In one embodiment, the second composition viscosity at 0.1 radians/s, measured at 190°C, is at least 3 percent greater than the viscosity of a similar composition that does not contain Component C, an "oxy amine"-containing compound.

In one embodiment, the second composition viscosity at 0.1 radians/s, measured at 190°C, is at least 5 percent greater than the viscosity of a similar composition that does not contain Component C, an "oxy amine"-containing compound.

In one embodiment, the second composition viscosity at 0.1 radians/s, measured at 190°C, is at least 10 percent greater than the viscosity of a similar composition that does not contain Component C, an "oxy amine"-containing compound.

In one embodiment, the second composition viscosity at 0.1 radians/s, measured at 190°C, is at least 20 percent greater than the viscosity of a similar composition that does not contain Component C, an "oxy amine"-containing compound.

In one embodiment, the second composition viscosity at 0.1 radians/s, measured at 190°C, is at least 30 percent greater than the viscosity of a similar composition that does not contain Component C, an "oxy amine"-containing compound.

In one embodiment, the second composition viscosity at 0.1 radians/s, measured at 190°C, is at least 40 percent greater than the viscosity of a similar composition that does not contain Component C, an "oxy amine"-containing compound

In one embodiment, the second composition [(viscosity at 0.1 radians/s)/(viscosity at 100 radian/s)] viscosity ratio, measured at 190°C, is at least 3 percent greater than the viscosity ratio of a similar composition that does not contain Component C, an "oxy amine"-containing compound.

In one embodiment, the second composition [(viscosity at 0.1 radians/s)/(viscosity at 100 radian/s)] viscosity ratio, measured at 190°C, is at least 5 percent greater than the viscosity ratio of a similar composition that does not contain Component C, an "oxy amine"-containing compound.

In one embodiment, the second composition [(viscosity at 0.1 radians/s)/(viscosity at 100 radian/s)] viscosity ratio, measured at 190°C, is at least 10 percent greater than the viscosity ratio of a similar composition that does not contain Component C, an "oxy amine"-containing compound.

In one embodiment, the second composition [(viscosity at 0.1 radians/s)/(viscosity at 100 radian/s)] viscosity ratio, measured at 190°C, is at least 20 percent greater than the viscosity ratio of a similar composition that does not contain Component C, an "oxy amine"-containing compound.

In one embodiment, the second composition [(viscosity at 0.1 radians/s)/(viscosity at 100 radian/s)] viscosity ratio, measured at 190°C, is at least 30 percent greater than the viscosity ratio of a similar composition that does not contain Component C, an "oxy amine"-containing compound.

In one embodiment, the second composition [(viscosity at 0.1 radians/s)/(viscosity at 100 radian/s)] viscosity ratio, measured at 190°C, is at least 40 percent greater than the viscosity ratio of a similar composition that does not contain Component C, an "oxy amine"-containing compound.

In one embodiment, the second composition has a tan delta value (at 190°C) of at least 5 percent lower than the tan delta value of a similar composition that does not contain Component C, an "oxy amine"-containing compound.

In one embodiment, the second composition has a tan delta value (at 190°C) of at least 10 percent lower than the tan delta value of a similar composition that does not contain Component C, an "oxy amine"-containing compound.

In one embodiment, the second composition has a tan delta value (at 190°C) of at least 15 percent lower than the tan delta value of a similar composition that does not contain Component C, an "oxy amine"-containing compound.

In one embodiment, the second composition has a tan delta value (at 190°C) of at least 20 percent lower than the tan delta value of a similar composition that does not contain Component C, an "oxy amine"-containing compound.

In one embodiment, the second composition has a tan delta value (at 190°C) of at least 30 percent lower than the tan delta value of a similar composition that does not contain Component C, an "oxy amine"-containing compound.

In one embodiment, the second composition has a tan delta value (at 190°C) of at least 40 percent lower than the tan delta value of a similar composition that does not contain Component C, an "oxy amine"-containing compound.

The invention also provides an article comprising at least one component formed from a first composition.

The invention also provides an article comprising at least one component formed from a second composition.

The invention also provides an article comprising at least one component formed from an inventive composition.

In one embodiment, the article is a film, a pipe, or a container.

An inventive first composition may comprise a combination of two or more embodiments as described herein.

An inventive second composition may comprise a combination of two or more embodiments as described herein.

An inventive composition may comprise a combination of two or more embodiments as described herein.

**"Oxy Amine"-Containing Compound**

The "oxy amine"-containing compound is selected from the compounds represented by Formula 1:

$(R_1)(R_2)N\text{-}O\text{-}R_3$ (Formula 1)

wherein $R_1$ and $R_2$ are each, independently of one another, a hydrogen, a $C_4$-$C_{42}$ alkyl, a $C_4$-$C_{42}$ aryl, or a substituted hydrocarbon groups comprising O and/or N, and where $R_1$ and $R_2$ may form a ring structure together; and

$R_3$ is hydrogen, a hydrocarbon, or a substituted hydrocarbon group comprising O and/or N.

Preferred groups for $R_3$ include -$C_1$-$C_{19}$ alkyl; -$C_6$-$C_{10}$ aryl; -$C_2$-$C_{19}$ alkenyl; -O-$C_1$-$C_{19}$ alkyl; -O-$C_6$-$C_{10}$ aryl; -NH-$C_1$-$C_{19}$ alkyl; -NH-$C_6$-$C_{10}$ aryl; -N-($C_1$-$C_{19}$ alkyl)$_2$. $R_3$ most preferably contains an acyl group.

The preferred compound may form nitroxyl radical (R1)(R2)N-O* or amynil radical (R1)(R2)N* after decomposition or thermolysis.

In one embodiment, the "oxy-amine"-containing compound is [9-(acetyloxy)-3,8,10-triethyl-7,8,10-trimethyl-1,5-dioxa-9-azaspiro[5.5]undec-3-yl]methyl octadecanoate, which has the following chemical structure:

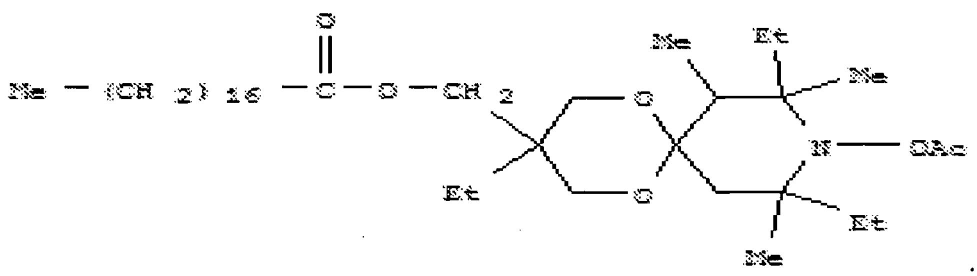

Examples of some preferred "oxy-amine"-containing compounds include the following:

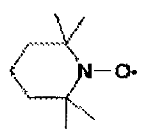
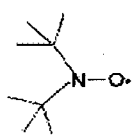
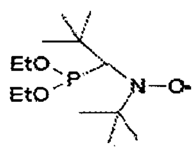
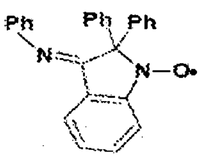
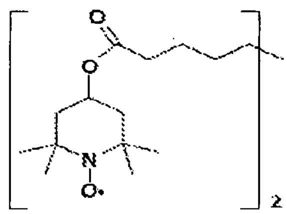

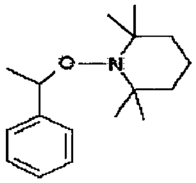
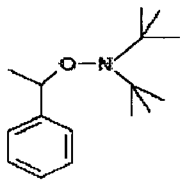
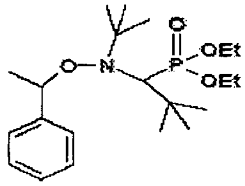
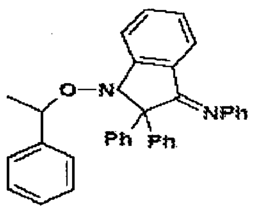

In one embodiment, the "oxy amine"-containing compound comprises at least two oxygen atoms, at least two nitrogen atoms, or at least one phenyl group.

In one embodiment, the "oxy amine"-containing compound comprises at least two nitrogen atoms, or at least one phenyl group.

In one embodiment, the "oxy amine"-containing compound comprises at least three oxygen atoms, or at least one nitrogen atom and at least one phenyl group.

In one embodiment, the "oxy amine"-containing compound comprises at least three oxygen atoms.

In one embodiment, the "oxy amine"-containing compound is a hydroxyl amine ester. In a further embodiment, the hydroxyl amine ester is [9-(acetyloxy)-3,8,10-triethyl-7,8,10-trimethyl-1,5-dioxa-9-azaspiro[5.5]undec-3-yl]methyl octadecanoate.

In one embodiment, the "oxy amine"-containing compound is directly used with a first ethylene-based polymer to form a first composition, and thus, less "oxy amine"-containing compound is required, leading to lowered cost to produce an improved melt strength resin.

In one embodiment, the first composition is added to a second ethylene-based polymer to form a second composition. In a further embodiment, the "oxy amine"-containing compound is present in an amount from 1 to 900 ppm, or from 15 to 600 ppm, or from 25 to 400 ppm, or from 30 to 200 ppm, based on the weight of the second composition.

The "oxy amine"-containing compound can be added to the first ethylene-based polymer in all customary mixing machines, in which the polymer is melted and mixed with the additives. Suitable machines are known to those skilled in the art. They are predominantly mixers, kneaders and extruders.

The process is preferably carried out in an extruder, by introducing the additive during processing. Particularly preferred processing machines are single-screw extruders, contra rotating and co-rotating twin-screw extruders, planetary-gear extruders, ring extruders or cokneaders. It is also possible to use processing machines, provided with at least one gas removal compartment, to which a vacuum can be applied. Suitable extruders and kneaders are described, for example, in Handbuch der Kunststoftextrusion, Vol. 1 Grundlagen, Editors F. Hensen, W. Knappe, H. Potente, 1989, pp. 3-7, ISBN.3-446-14339-4 (Vol. 2 Extrusionsanlagen 1986, ISBN 3-446-14329-7). For example, the screw length can be 1-60 times the screw diameter, preferably 35-48 times the screw diameters. The rotational speed of the screw is preferably 10-600 revolutions per minute (rpm), more preferably 25-300 rpm.

In one embodiment, the "oxy amine"-containing compound is added to the first ethylene-based polymer at 1000 to 10000 ppm, to form a first composition, and then the first composition is introduced, via an extruder into a melted second ethylene-based polymer, using a static mixer to blend the two materials, preferably at 1 to 20 wt% of the first composition. The first composition could be processed in an extruder, preferably at temperatures from 180 to 250°C. In one embodiment the first composition could be processed in an extruder, preferably at temperatures from 180 to 220°C. The temperatures in the static mixer could range from 200 to 250°C, with a residence time in the mixer ranging from 1 to 10 minutes.

The maximum throughput is dependent on the screw diameter, the rotational speed and the driving force. The process of the present invention can also be carried out at a level lower than maximum throughput, by varying the parameters mentioned, or employing weighing machines delivering dosage amounts.

If a plurality of components is added, these can be premixed or added individually.

The polymers need to be subjected to an elevated temperature for a sufficient period of time, when a desired modification (for example, viscosity, tan delta) should occur. The temperature is generally above the softening point of the polymers. In one embodiment, a temperature range lower than 280°C, particularly from 160°C to 280°C is employed. In a particularly preferred process variant, the temperature range from 200°C to 270°C is employed.

The period of time necessary for reaction can vary as a function of the temperature, the amount of material to be reacted, and the type of, for example, extruder used. It is usually from 10 seconds to 30 minutes, in particular from 20 seconds to 20 minutes.

An "oxy amine"-containing compound may comprise a combination of two or more embodiments as described herein.

## First Ethylene-based Polymer

In one embodiment, the first ethylene-based polymer has a density greater than, or equal to, 0.910 g/cm$^3$, or greater than, or equal to, 0.935 g/cm$^3$, or greater than, or equal to, 0.940 g/cm$^3$. In another embodiment, the first ethylene-based polymer has a density less than, or equal to, 0.970 g/cm$^3$, or less than, or equal to, 0.965 g/cm$^3$, or less than, or equal to, 0.960 g/cm$^3$. In another embodiment, first ethylene-based polymer has a density less than, or equal to, 0.970 g/cm$^3$, or less than, or equal to, 0.965 g/cm$^3$. In another embodiment, the first ethylene-based polymer has a density from 0.920 to 0.970 g /cm3 or from 0.930 to 0.965 g /cm3 or from 0.940 to 0.960 g/cm$^3$.

In one embodiment, the first ethylene-based polymer has a high load melt index ($I_{21}$) greater than, or equal to, 1 g/10 min, or greater than, or equal to, 2 g/10 min, or greater than, or equal to, 3 g/10 min. In another embodiment, the first ethylene-based polymer has a high load melt index ($I_{21}$) less than, or equal to, 50 g/10 min, or less than, or equal to, 20 g/10 min, or less than, or equal to, 10 g/10 min. In another embodiment, the first ethylene-based polymer has a high load melt index ($I_{21}$) from 1 to 50 g/10 min or from 2 to 20 g/10 min or from 3 to 10 g/10 min.

In one embodiment, the first ethylene-based polymer has a melt index ($I_2$) less than, or equal to 10 g/10 min or less than or equal to 5 g/10 min or less than or equal to 1 g/10 min, or less than, or equal to, 0.5 g/10 min, or less than, or equal to, 0.2 g/10 min. In another embodiment, the first ethylene-based polymer has a melt index ($I_2$) greater than, or equal to, 0.05 g/10 min, or greater than, or equal to, 0.1 g/10 min.

In one embodiment, the first ethylene-based polymer has a melt flow ratio ($I_{21}/I_2$) greater than or equal to 50, or greater than or equal to 80, or greater than or equal to 100, or greater than or equal to 120, or greater than or equal to 140.

In one embodiment, the first ethylene-based polymer has a molecular weight distribution ($M_w/M_n$) greater than, or equal to, 12, or greater than, or equal to, 15, or greater than, or equal to, 18, as determined by either conventional GPC or light scattering (LS) GPC. In another embodiment, the molecular weight distribution is greater than, or equal to, 20, as determined by either conventional GPC or LS GPC.

In one embodiment, the first ethylene-based polymer has a molecular weight distribution ($M_w/M_n$) less than, or equal to, 50, or less than, or equal to, 40, or less than, or equal to, 35, as determined by either conventional GPC or LS GPC.

As discussed above, the molecular weight distribution is determined by either conventional GPC or LS GPC. In a further embodiment, the molecular weight distribution is determined by conventional GPC. In another embodiment, the molecular weight distribution is determined by LS GPC.

In one embodiment, the first ethylene-based polymer has a weight fraction greater than, or equal to, 4.5, preferably greater than, or equal to, 5, weight percent, based on the weight of the first ethylene-based polymer, which comprises polymer molecules that have a molecular weight greater than $10^6$ g/mole, as determined by the respective area fractions of either the conventional GPC or LS GPC profile of the blend. In a further embodiment, the respective area fractions are of the conventional GPC profile. In another embodiment, the respective area fractions are of the LS GPC profile.

In one embodiment, the first ethylene-based polymer has a weight fraction greater than, or equal to, 6 weight percent, based on the weight of the first ethylene-based polymer, which comprises polymer molecules that have a molecular weight greater than $10^6$ g/mole as determined by the respective area fractions of the LS GPC profile of the first ethylene-based polymer. In another embodiment, the respective area fractions of conventional GPC are used.

In one embodiment, the first ethylene-based polymer has a weight fraction greater than, or equal to, 8 weight percent, based on the weight of the first ethylene-based polymer, which comprises polymer molecules that have a molecular weight greater than $10^6$ g/mole as determined by the respective area fractions of the LS GPC of the first ethylene-based polymer. In another embodiment, the respective area fractions of conventional GPC are used.

In one embodiment, the first ethylene-based polymer has a weight fraction greater than, or equal to, 10 weight percent, based on the weight of the first ethylene-based polymer, which comprises polymer molecules that have a molecular weight greater than $10^6$ g/mole as determined by the respective area fractions of the LS GPC of the first ethylene-based polymer. In another embodiment, the respective area fractions of conventional GPC are used.

In one embodiment, the first ethylene-based polymer has a weight fraction greater than, or equal to, 0.1, preferably greater than, or equal to, 0.5, more preferably greater than, or equal to, 1 weight percent, based on the weight of the first ethylene-based polymer, which comprises polymer molecules that have a molecular weight greater than $10^7$ g/mole, as determined by the respective area fractions of the LS GPC profile of the first ethylene-based polymer. In another embodiment, the respective area fractions of conventional GPC are used.

As discussed above, a weight fraction (area fraction) is determined by either conventional GPC or LS GPC. In a further embodiment, the weight fraction is determined by conventional GPC. In another embodiment, the weight fraction is determined by LS GPC.

The first ethylene-based polymer may comprise a combination of two or more embodiments as described herein.

In one embodiment, the first ethylene-based polymer comprises a high molecular weight ethylene-based polymer and a low molecular weight polyethylene-based polymer. Additional features of these components are described below.

In one embodiment, the high molecular weight ethylene-based polymer is present in an amount greater than, or equal to 50 weight percent, or greater than, or equal to 55 weight percent, or greater than, or equal to 60 weight percent, based on the sum weight of the high molecular weight ethylene-based polymer and the low molecular weight ethylene-based polymer.

In one embodiment, the low molecular weight ethylene-based polymer is present in an amount less than, or equal to 50 weight percent, or less than, or equal to 45 weight percent, and or less than, or equal to 40 weight percent, based on the sum weight of the high molecular weight ethylene-based interpolymer and the low molecular weight ethylene-based polymer.

In one embodiment, the weight ratio of the "high molecular weight ethylene-based polymer" to the "low molecular weight ethylene-based polymer" (HMW/LMW) is from 50/50 to 70/30, more preferably from 51/49 to 67/33, and more preferably from 52/48 to 65/35.

Examples of suitable first ethylene-based polymers include CONTINUUM DGDA-2490 Bimodal Polyethylene Resins, available from The Dow Chemical Company.

The first ethylene-based polymer may comprise a combination of two or more embodiments as described herein.

The components (high molecular weight ethylene-based polymer, low molecular weight ethylene-based polymer) of a first ethylene-based polymer may each, individually, comprise a combination of two or more embodiments as described herein.

*The High Molecular Weight (HMW) Component*

In one embodiment, the high molecular weight ethylene-based polymer has a density less than, or equal to, 0.955 g/cm$^3$, or less than, or equal to, 0.950 g/cm$^3$, or less than, or equal to, 0.945 g/cm$^3$, or less than, or equal to, 0.940 g/cm$^3$. In a further embodiment, the high molecular weight ethylene-based polymer is an ethylene-based interpolymer.

In one embodiment, the high molecular weight ethylene-based polymer has a density greater than, or equal to, 0.900 g/cm$^3$, or greater than, or equal to, 0.905 g/cm$^3$, or greater than, or equal to, 0.910 g/cm$^3$, and more preferably greater than, or equal to, 0.915 g/cm$^3$, or greater than, or equal to, 0.920 g/cm$^3$. In a further embodiment, the high molecular weight ethylene-based polymer is an ethylene-based interpolymer.

In one embodiment, the density of the high molecular weight ethylene-based polymer is in the range from 0.910 to 0.945 g/cm$^3$, and preferably in the range from 0.915 to 0.940 g/cm$^3$. In a further embodiment, the high molecular weight ethylene-based polymer is an ethylene-based interpolymer.

In one embodiment, the high molecular weight ethylene-based polymer has a melt index ($I_{21}$) less than, or equal to, 2 g/10 min, or less than, or equal to, 1.5 g/10 min, or less than, or equal to, 1 g/10 min. In a further embodiment, the high molecular weight ethylene-based polymer is an ethylene-based interpolymer.

As understood in the art, the higher molecular weight component has a higher molecular weight than the lower molecular weight component, as determined by the polymerization conditions of each component, melt index, GPC methods (molecular weights and/or average molecular weights), and/or other methods known in the art.

In one embodiment, the high molecular weight ethylene-based polymer has a molecular weight distribution (MWD) greater than 3, or greater than 3.5, or greater than 3.8, as determined by either conventional GPC or LS GPC. In a further embodiment, the high molecular weight ethylene-based polymer is an ethylene-based interpolymer. In one embodiment, the MWD is determined by conventional GPC. In another embodiment, the MWD is determined by LS GPC.

In one embodiment, high molecular weight ethylene-based polymer has a molecular weight distribution less than 10, or less than 8, or less than 6, as determined by either conventional GPC or LS GPC. In a further embodiment, the high molecular weight ethylene-based polymer is an ethylene-based interpolymer. As discussed above, the molecular weight distribution is determined by either conventional GPC or LS GPC. In one embodiment, the molecular weight distribution is determined by conventional GPC. In another embodiment, the molecular weight distribution is determined by LS GPC.

In one embodiment, the high molecular weight ethylene-based polymer is an ethylene/α-olefin interpolymer, and further an ethylene/α-olefin copolymer. In a preferred embodiment, the α-olefin is a C3-C20 α-olefin, a C4-C20 α-olefin, and more preferably a C4-C12 α-olefin, and even more preferably a C4-C8 α-olefin, and most preferably C6-C8 α-olefin.

The term "interpolymer," as used herein, refers to a polymer having polymerized therein at least two monomers. It includes, for example, copolymers, terpolymers and tetrapolymers. As discussed above, it particularly includes a polymer prepared by polymerizing ethylene with at least one comonomer, typically an alpha olefin (α-olefin) of 3 to 20 carbon atoms (C3-C20), preferably 4 to 20 carbon atoms (C4-C20), more preferably 4 to 12 carbon atoms (C4-C12) and even more preferably 4 to 8 carbon atoms (C4-C8) and most preferably C6-C8. The α-olefins include, but are not limited to, propylene 1-butene, 1-pentene, 1-hexene, 4-methyl-1-pentene, 1-heptene, and 1-octene. Preferred α-olefins include propylene, 1-butene, 1-pentene, 1-hexene, 4-methyl-1-pentene, 1-heptene, and 1-octene. Especially preferred α-olefins include 1-hexene and 1-octene, and more preferably 1-hexene. The α-olefin is desirably a C3-C8 α-olefin, and more desirably a C3-C8 α-olefin, and most desirably C6-C8 α-olefin.

Interpolymers include, but are not limited to, ethylene/butene (EB) copolymers, ethylene/hexene-1 (EH), ethylene/octene-1 (EO) copolymers. Preferred copolymers include EB, EH and EO copolymers, and most preferably EH and EO copolymers.

In a preferred embodiment, the high molecular weight ethylene-based interpolymer is an ethylene/1-hexene interpolymer, and further an ethylene/1-hexene copolymer.

In one embodiment, the high molecular weight ethylene-based polymer is a heterogeneously branched ethylene-based interpolymer. A heterogeneously branched interpolymer(s), as known in the art, is typically produced by Ziegler-Natta type catalysts, and contains a non-homogeneous distribution of comonomer among the molecules of the interpolymer.

In one embodiment, high molecular weight ethylene-based polymer is a heterogeneously branched ethylene-based interpolymer, and further a heterogeneously branched ethylene-based copolymer.

In one embodiment, the low molecular weight ethylene-based polymer is a heterogeneously branched ethylene-based interpolymer, and further a heterogeneously branched ethylene-based copolymer.

The high molecular weight ethylene-based polymer may comprise a combination of two or more embodiments as described herein.

*The Low Molecular Weight (LMW) Component*

In one embodiment, the low molecular weight ethylene-based polymer has a density greater than, or equal to, 0.940 g/cm$^3$, or greater than, or equal to, 0.950 g/cm$^3$, or greater than, or equal to, 0.960 g/cm$^3$. In a further embodiment, the low molecular weight ethylene-based polymer is an ethylene-based interpolymer. In another embodiment, the low molecular weight ethylene-based polymer is a polyethylene homopolymer.

In one embodiment, the low molecular weight ethylene-based polymer has a density less than, or equal to, 0.975 g/cm$^3$, or less than, or equal to, 0.970 g/cm$^3$, or less than, or equal to, 0.965 g/cm$^3$, or less than, or equal to, 0.960 g/cm$^3$. In one embodiment, the density ranges from 0.940 to 0.965 g/cm$^3$, or from 0.945 to 0.960 g/cm$^3$. In a further embodiment, the low molecular weight ethylene-based polymer is an ethylene-based interpolymer. In another embodiment, the low molecular weight ethylene-based polymer is a polyethylene homopolymer.

In one embodiment, the low molecular weight ethylene-based polymer has a density less than, or equal to, 0.980 g/cm$^3$, or less than, or equal to, 0.975 g/cm$^3$. In another embodiment, the density ranges from 0.940 to 0.980 g/cm3 or from 0.945 to 0.975 g/cm$^3$. In a further embodiment, the low molecular weight ethylene-based polymer is an ethylene-based interpolymer. In another embodiment, the low molecular weight ethylene-based polymer is a polyethylene homopolymer.

In one embodiment, the low molecular weight ethylene-based polymer is an ethylene/$\alpha$-olefin interpolymer, and further an ethylene/($\alpha$-olefin copolymer. In a preferred embodiment, the $\alpha$-olefin is a C3-C20 $\alpha$-olefin, a preferably a C4-C20 $\alpha$-olefin, and more preferably a C4-C12 $\alpha$-olefin, and even more preferably a C4-C8 $\alpha$-olefin and most preferably C6-C8 $\alpha$-olefin. The $\alpha$-olefins include, but are not limited to, propylene 1-butene, 1-pentene, 1-hexene, 4-methyl-1-pentene, 1-heptene, and 1-octene. Preferred $\alpha$-olefins include propylene, 1-butene, 1-pentene, 1-hexene, 4-methyl-1-pentene, 1-heptene, and 1-octene. Especially preferred $\alpha$-olefins include 1-hexene and 1-octene, and more preferably 1-hexene. The $\alpha$-olefin is desirably a C3-C8 $\alpha$-olefin, and more desirably a C4-C8 $\alpha$-olefin and most desirably a C6-C8 $\alpha$-olefin.

Interpolymers include, but are not limited to, ethylene/butene-1 (EB) copolymers, ethylene/hexene-1 (EH), ethylene/octene-1 (EO) copolymers. Preferred copolymers include EB, EH and EO copolymers, and most preferred copolymers are EH and EO.

In one embodiment, the low molecular weight component is an ethylene/1-hexene copolymer.

In another embodiment, the low molecular weight component is a polyethylene homopolymer.

The low molecular weight ethylene-based polymer may comprise a combination of two or more embodiments as described herein.

**Additives**

An inventive composition may further comprise one or more additives. In a further embodiment, the one or more additives are selected from the group consisting of hindered amines, hindered phenols, metal deactivators, UV absorbers, thiosyngerists, alkyl radical scavengers, hindered amine stabilizers, multifunctional stabilizers, phosphites, phosponites, acid neutralizers, processing aids, nucleating agents, fatty acid stearates, fluoroelastomers, slip agents, antiblock agents, fillers (nano and regular size), and combinations thereof. In another embodiment, the one or more additives are selected from the group consisting of CYASORB 3529 (Cytec), IRGANOX 1010 (Ciba Specialty Chemicals), IRGANOX 1076 (Ciba Specialty Chemicals), IRGANOX 1330 (Ciba Specialty Chemicals), IRGANOX MD1024 (Ciba Specialty Chemicals), IRGAFOS 168 (Ciba Specialty Chemicals), calcium stearate, DYNAMAR FX 5911X or G (3M Manufacturing and Industry), and combinations thereof. In yet another embodiment, the one or more additives are selected from the group consisting of CYASORB 3529, IRGANOX 1010, IRGANOX 1076, IRGANOX 1330, IRGANOX MD1024, DOVERPHOS 9228 (Dover Chemical Corp.), calcium stearate, DYNAMAR FX 5911X or G, and combination thereof. In another embodiment, the one or more additives are selected from the group consisting of UV N30 (Clariant), IRGANOX 1330, DOVERPHOS 9228, IRGANOX MD1024, HO3, calcium stearate, DYNAMAR FX 5911X or G, and combinations thereof.

In one embodiment, the one or more antioxidants are selected from the group consisting of the following: hindered phenols, aromatic amines, phosphites, phosphonites, organic sulfur containing compounds, dithiophosphonates, and combinations thereof.

In one embodiment, the one or more antioxidants are selected from the group consisting of the following: IRGANOX 1010 (Ciba Specialty Chemicals), IRGANOX 1076 (Ciba Specialty Chemicals), IRGANOX 1330 (Ciba Specialty Chemicals), IRGANOX MD1024 (Ciba Specialty Chemicals), IRGAFOS 168 (Ciba Specialty Chemicals), DOVERPHOS 9228 (Dover Chemical Corp.), BHT, Anox 20, Anox PP18, Weston TNPP, Alkanox 240, and combinations thereof.

In one embodiment, the one or more antioxidants are selected from the group consisting of the following: IRGANOX 1010 (Ciba Specialty Chemicals), IRGANOX 1076 (Ciba Specialty Chemicals), IRGANOX 1330 (Ciba Specialty Chemicals), IRGANOX MD1024 (Ciba Specialty Chemicals), IRGAFOS 168 (Ciba Specialty Chemicals), DOVERPHOS 9228 (Dover Chemical Corp.), and combinations thereof.

**Fabricated Articles**

The compositions of the present invention can be used to manufacture a shaped article, or one or more components of a shaped article. Such articles may be single-layer or multi-layer articles, which are typically obtained by suitable known conversion techniques, applying heat, pressure, or a combination thereof, to obtain the desired article. Suitable conversion techniques include, for example, blow-molding, co-extrusion blow-molding, injection blow molding, injection molding, injection stretch blow molding, compression molding, compression blow forming, rotomolding, extrusion, pultrusion, calendering and thermoforming. Shaped articles provided by the invention include, for example, pipes, drums, bottles, drip tapes and tubing, geomembranes, films, sheets, fibers, profiles and molded articles. Films include, but are not limited to, blown films, cast films and bi-oriented films.

The compositions according to the present invention are particularly suitable for fabrication of hollow containers with an excellent balance of mechanical properties. Furthermore, light weight containers can be produced, while still meeting the container performance requirements. A higher percentage of post consumer recycle can also be incorporated in containers fabricated from the inventive compositions, without loss of container performance requirements.

The compositions according to the present invention are also particularly suitable for durable applications, especially pipes. Pipes fabricated from an inventive composition have good sag resistance. Pipes include monolayer pipes, as well as multilayer pipes, including multilayer composite pipes. Typically, the pipes of the invention are formed from inventive compositions, which also contain a suitable combination of additives, such as, an additive package designed for pipe applications, and/or one or more fillers.

**DEFINITIONS**

Unless stated to the contrary, implicit from the context, or customary in the art, all parts and percents are based on weight, and all test methods are current as of the filing date of the priority application (see page 1).

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term "melt processing" refers to any process, in which the polymer is softened or melted, such as extrusion, pelletizing, film blowing and casting, thermoforming, compounding in polymer melt form, and the like.

The term "extruder" is used for its broadest meaning to include such devices, as a device which extrudes pellets.

The terms "blend" or "polymer blend," as used herein, refer to a blend of two or more polymers. Such a blend may or may not be miscible. Such a blend may or may not be phase separated. Such a blend may or may not contain one or more domain configurations, as determined from transmission electron microscopy, light scattering, x-ray scattering, and other methods known in the art.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that

are not essential to operability. The term "consisting of" excludes any component, step or procedure not specifically delineated or listed.

The term "antioxidant" as used herein refers to a chemical compound that is added to the polymer to protect the polymer from degradation, including, but not limited to, light induced, thermal and/or oxidative degradation. Examples of antioxidants include: hindered phenols, aromatic amines, phosphites, phosphonites, organic sulfur containing compounds and dithiophosphonates.

## TEST METHODS

### Melt Strength

Melt strength measurements were conducted on a Gottfert Rheotens 71.97 (Göettfert Inc.; Rock Hill, SC), attached to a Gottfert Rheotester 2000 capillary rheometer. The melted sample (about 25 to 30 grams) was fed with a Göettfert Rheotester 2000 capillary rheometer, equipped with a flat entrance angle (180 degrees) of length of 30 mm, diameter of 2.0 mm, and an aspect ratio (length/diameter) of 15. After equilibrating the samples at 190°C for 10 minutes, the piston was run at a constant piston speed of 0.265 mm/second. The standard test temperature was 190°C. The sample was drawn uniaxially to a set of accelerating nips located 100 mm below the die, with an acceleration of 2.4 $mm/s^2$. The tensile force was recorded as a function of the take-up speed of the nip rolls. Melt strength was reported as the plateau force (cN) before the strand broke. The following conditions were used in the melt strength measurements: plunger speed = 0.265 mm/second; wheel acceleration = 2.4 $mm/s^2$; capillary diameter = 2.0 mm; capillary length = 30 mm; and barrel diameter = 12 mm.

### Melt Index

Melt index was determined using ASTM method D-1238 at 190°C. The melt index, identified as $I_2$, refers to the measurement with 2.16 kg weight, and the melt indexes indentified as $I_5$ and $I_{10}$, refers to the measurements using a 5 kg and a 10 kg weight, respectively. High load melt index ($I_{21}$) refers to measurements using a 21.6 kg weight.

### Density

Samples for density measurements were prepared according to ASTM D 4703-10. Density was measured per ASTM D 792 Method B, within one hour of sample pressing.

### Dynamic Mechanical Spectroscopy

Resins were compression-molded into "3 mm thick x 2.54 cm (1 inch)" circular plaques, at 177°C (350°F), for five minutes, under 10.5 MPa (1500 psi) pressure in air. The sample was then taken out of the press, and placed on the counter to cool.

A constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes, at 190°C. The plates were then closed to a gap of 2 mm, the sample trimmed (extra sample that extends beyond the circumference of the "25 mm diameter" plate is removed), and then the test was started. The method had an additional five minute delay built in, to allow for temperature equilibrium. The experiments were performed at 190°C, over a frequency range of 0.1 to 100 radian/s. The strain amplitude was constant at 10%. The stress response was analyzed in terms of amplitude and phase, from which the storage modulus (G'), loss modulus (G"), complex modulus (G*), complex viscosity $\eta^*$, tan ($\delta$) or tan delta, viscosity at 0.1 rad/s (V0.1), the viscosity at 100 rad/s (V100), and the Viscosity Ratio (V0.1/V100) were calculated.

### Gel Permeation Chromatography

The Triple Detector Gel Permeation Chromatography (3D-GPC or TD-GPC) system consists of a Waters (Milford, Mass) 150°C high temperature chromatograph. Other suitable high temperatures GPC instruments include Polymer Laboratories (Shropshire, UK) Model 210 and Model 220, equipped with an on-board differential refractometer (RI). Additional detectors can include an IR4 infra-red detector from Polymer ChAR (Valencia, Spain), Precision Detectors (Amherst, Mass.), 2-angle laser light scattering (LS) detector Model 2040, and a Viscotek (Houston, Tex.) 150R 4-capillary solution viscometer. A GPC with these latter two independent detectors, and at least one of the former detectors, is sometimes referred to as "3D-GPC or TD-GPC," while the term "GPC" alone generally refers to conventional GPC. Depending on the sample, either the 15° angle or the 90° angle of the light scattering detector is used for calculation

purposes. Data collection is performed using Viscotek TriSEC software, Version 3, and a 4-channel Viscotek Data Manager DM400. The system is also equipped with an on-line solvent degassing device from Polymer Laboratories (Shropshire, United Kingdom).

Suitable high temperature GPC columns can be used, such as four "30 cm long" Shodex HT803, 13 µm (micron) columns, or four "30 cm" Polymer Labs columns of 20- µm (micron) mixed-pore-size packing (MixA LS, Polymer Labs). The sample carousel compartment is operated at 140°C and the column compartment is operated at 150°C. The samples are prepared at a concentration of "0.1 grams of polymer in 50 milliliters of solvent." The chromatographic solvent and the sample preparation solvent contain "200 ppm of butylated hydroxytoluene (BHT)" in trichloro benzene (TCB). Both solvents are sparged with nitrogen. The polyethylene samples are gently stirred at 160°C for four hours. The injection volume is 200 microliters. The flow rate through the GPC is set at 1 ml/minute.

The GPC column set is calibrated by running 21 narrow molecular weight distribution polystyrene standards. The molecular weight (MW) of the standards ranges from 580 to 8,400,000, and the standards are contained in 6 "cocktail" mixtures. Each standard mixture has at least a decade of separation between individual molecular weights. The standard mixtures are purchased from Polymer Laboratories. The polystyrene standards are prepared at "0.025 g in 50 mL of solvent" for molecular weights equal to, or greater than, 1,000,000, and "0.05 g in 50 mL of solvent" for molecular weights less than 1,000,000. The polystyrene standards were dissolved at 80°C, with gentle agitation, for 30 minutes. The narrow standard mixtures are run first, and in order of decreasing amount of the "highest molecular weight component" to minimize degradation.

The polystyrene standard peak molecular weights were converted to polyethylene molecular weights using the following equation (as described in Williams and Ward, J. Polym. Sci., Polym. Let., 6, 621 (1968)):

$$\text{Mpolyethylene} = \text{A}(\text{Mpolystyrene})^{\text{B}} \qquad (1).$$

In Equation 1, B has a value of 1.0, and the experimentally determined value of A is 0.38.

A first order polynomial was used to fit the respective polyethylene-equivalent calibration points, obtained from equation (1), to their observed elution volumes. The actual polynomial fit was obtained, so as to relate the logarithm of polyethylene equivalent molecular weights to the observed elution volumes (and associated powers) for each polystyrene standard.

Number, weight, and z-average molecular weights were calculated according to the following equations:

$$\overline{Mn} = \frac{\sum^{i} Wf_i}{\sum^{i} \left( Wf_i / M_i \right)} \qquad (2)$$

$$\overline{Mw} = \frac{\sum^{i} (Wf_i * M_i)}{\sum^{i} Wf_i} \qquad (3)$$

$$\overline{Mz} = \frac{\sum^{i} (Wf_i * M_i^{2})}{\sum^{i} (Wf_i * M_i)} \qquad (4)$$

Where, Wfi is the weight fraction of the i-th component, and Mi is the molecular weight of the i-th component.

The MWD was expressed as the ratio of the weight average molecular weight (Mw) to the number average molecular weight (Mn).

The A value was determined by adjusting A value in equation (1) until Mw, the weight average molecular weight calculated using equation (3), and the corresponding retention volume polynomial, agreed with the independently determined value of Mw, obtained in accordance with the linear homopolymer reference with known weight average molecular weight of 115,000 g/mol.

## Environmental Stress Crack Resistance (ESCR)

Sample ESCR was determined by ASTM 1693D Method B, in 10% aqueous detergent IGEPAL CO-630 solution.

## EXAMPLES

The polyethylene base resins, master batches, and examples of inventive and comparative compositions are described in Tables 1 through 3. Examples of suitable ethylene-based polymers include HDPE polymers (e.g., CONTINUUM DGDA-2490) available from The Dow Chemical Company. LDPE polymers include the DOW LDPE polymers available from The Dow Chemical Company.

## Polyethylene Base Resins

Details of the polyethylene base resins are listed in Table 1.
Base Resin 1 (PEBR1): HDPE, Gas phase, Ziegler-Natta catalyzed, density of 0.949 g/cm$^3$, $I_{21}$ of 7 dg/min.
Base Resin 2: (PEBR2) Ziegler-Natta catalyzed HDPE resin. The PEBR2 resin density is 0.949 g/cm$^3$. It has a high load melt index ($I_{21}$) of 7 dg/min.
Base Resin 3: (PEBR3) is LDPE made in a high-pressure reactor having a melt index of 0.7 g/10 min ($I_2$) and a density of 0.925 g/cm$^3$.

## "Oxy-amine" Compound is an Alkoxy Amine (AA)

The alkoxy amine [9-(acetyloxy)-3,8,10-triethyl-7,8,10-trimethyl-1,5-dioxa-9-azaspiro[5.5]undec-3-yl]methyl octadecanoate was used to prepare the master batches.

## Master Batch (MB) Compositions

MB-A: was prepared by melt blending the base resin PEBR1 with 5600 ppm AA.
MB-B: was prepared by melt blending the base resin PEBR3 with 5600 ppm AA.
The MB compositions are listed in Table 2.
The master batch is prepared as follows: the polyethylene base resin is compounded with the AA additive in a 30 mm, co-rotating, inter meshing Coperion Werner-Pfleiderer ZSK-30 (ZSK-30) twin screw extruder. The ZSK-30 has ten barrel sections with an overall length of 960 mm and a 32 length to diameter ratio (L/D). The following temperatures profile was used: Zone 1: 95°C / Zone 2:195°C / Zone 3: 215°C / Zone 4: 220°C / Zone 5: 225°C / Zone 6: 235°C. The screw shaft speed was set at 275 rpm, resulting in an output rate of approximately 19.5 kg/ h (43 lb/h).

## Inventive and Comparative Compositions

The inventive compositions were prepared by extrusion melt blending the respective base resin and master batch on the ZSK 30 extruder. The master batch amount was adjusted such that the AA compound was added at a concentration between 60 to 250 ppm to the inventive composition.
The comparative compositions were subjected to the same melt extrusion step as the inventive compositions but excluding a master batch containing the AA compound.
Details of the comparative and inventive compositions are given in Table 3.

Table 1 Base Resins

| No # | Base Resin | Density (g/cm$^3$) | $I_2$ (g/10 min) | $I_{21}$ (g/10 min) | Irganox 1010 (ppm) | Irgafos 168 (ppm) | CaSt (ppm) |
|---|---|---|---|---|---|---|---|
| 1 | PEBR1 | 0.949 | | 7 | 0 | 1200 | 600 |
| 2 | PEBR2 | 0.949 | | 7 | 1160 | 1160 | 560 |
| 3 | PEBR3 | 0.925 | 0.7 | | | | |

Table 2 Master Batches

| No # | Master Batch | Base Resin | AA (ppm) |
|---|---|---|---|
| 1 | MB-A | PEBR1 | 5600 |
| 2 | MB-B | PEBR3 | 5600 |

Table 3 Inventive and Comparative Compositions

| No # | Resin | Base Resin | Master Batch | AA Added to Composition (ppm) |
|---|---|---|---|---|
| 1 | Comparative 1 | PEBR1 | No MB | 0 |
| Set 1 | | | | |
| 2 | Inventive 1 | PEBR1 | MB-A | 60 |
| 3 | Inventive 2 | PEBR1 | MB-A | 120 |
| 4 | Inventive 3 | PEBR1 | MB-A | 250 |
| Set 2 | | | | |
| 5 | Inventive 4 | PEBR1 | MB-B | 60 |
| 6 | Inventive 5 | PEBR1 | MB-B | 120 |
| 7 | Inventive 6 | PEBR1 | MB-B | 250 |
| Set 3 | | | | |
| 8 | Comparative 2 | PEBR2 | No MB | 0 |
| 9 | Inventive 7 | PEBR2 | MB-B | 60 |
| 10 | Inventive 8 | PEBR2 | MB-B | 120 |
| 11 | Inventive 9 | PEBR2 | MB-B | 250 |

The inventive and comparative composition properties are shown in Tables 4 and 5. The MW values in Table 4 were determined by conventional GPC.

Table 4: Inventive and Comparative Composition $I_5$, $I_{21}$ and MW Properties

| Resin | $I_5$ | $I_{21}$ | Mn | Mw | Mz |
|---|---|---|---|---|---|
| | g/10 min | g/10 min | g/mol | g/mol | g/mol |
| Comp. 1 | 0.27 | 6.50 | 12,170 | 196,530 | 685,400 |
| Inv. 1 | 0.24 | 6.28 | 10,560 | 201,590 | 745,000 |
| Inv. 2 | 0.24 | 6.35 | 10,230 | 212,970 | 821,300 |
| Inv. 3 | 0.22 | 6.30 | 10,820 | 209,400 | 801,200 |
| Inv. 4 | 0.24 | 6.43 | 10,030 | 214,850 | 841,500 |
| Inv. 5 | 0.24 | 6.12 | 9,900 | 203,780 | 773,500 |
| Inv. 6 | 0.21 | 5.88 | 10,150 | 195,320 | 741,300 |
| Comp. 2 | 0.34 | 7.97 | 13,380 | 164,490 | 92,400 |
| Inv. 7 | 0.33 | 7.75 | 9,790 | 214,180 | 859,100 |
| Inv. 8 | 0.32 | 7.20 | 9,270 | 198,100 | 765,400 |
| Inv. 9 | 0.30 | 7.00 | 9,950 | 193,140 | 728,200 |

Table 5: Inventive and Comparative Composition Viscoelastic Properties

| Resin | Melt Strength | Viscosity η* at 0.1 rad/s | Ratio η* at 0.1 rad/s to η* at 100 rad/s | Tan Delta |
|---|---|---|---|---|
| | cN | Pa.s | | |
| Comp. 1 | 13.2 | 101,000 | 37.6 | 1.66 |
| Set 1 | | | | |
| Inv. 1 | 13.9 | 123,000 | 45.3 | 1.38 |
| Inv. 2 | 14.1 | 147,000 | 53.0 | 1.21 |
| Inv. 3 | 14.7 | 233,000 | 79.8 | 0.86 |
| Set 2 | | | | |
| Inv. 4 | 14.5 | 105,000 | 41.5 | 1.52 |
| Inv. 5 | 15.3 | 154,000 | 58.6 | 1.07 |
| Inv. 6 | 15.2 | 145,000 | 56.1 | 1.13 |
| Set 3 | | | | |
| Comp. 2 | 12.0 | 74,929 | 31.3 | 2.10 |
| Inv. 7 | 12.8 | 78,006 | 32.5 | 1.97 |
| Inv. 8 | 13.4 | 80,240 | 33.6 | 1.88 |
| Inv. 9 | 14.4 | 114,000 | 47.3 | 1.28 |

All the compositions listed in Table 5 have environmental stress crack resistance, F50, well above 1000 h. The sample ESCR was determined by the ASTM 1693D Method B, in 10% aqueous Igepal solution. The test was stopped at 1000 h as no specimen breaks occurred during this time period.

The properties of the inventive examples are compared to the corresponding comparative examples in Figures 1 to 15. Figures 1, 2 and 3 are a comparison of the molecular weight distribution as determined by conventional GPC. These figures and Table 4 shows the inventive samples have lower $I_5$ and $I_{21}$, and higher Mw/Mn ratio than the respective comparative samples. It is seen from Figures 4, 5, 6 and Table 5, that with increasing AA incorporation, the melt strength of the inventive compositions increases. From Figures 7, 8, 9 and Table 5, it is seen that the inventive compositions have higher low shear viscosity (eta* at 0.1 rad/s), and greater shear thinning or higher eta* at 0.1 rad/s to eta* at 100 rad/s ratio, versus the respective comparative samples. Figure 10 to 15, and Table 5, show that the inventive samples are more elastic than the respective comparative samples. All these features show the inventive samples to have better processing (sag resistance, melt strength, easier to process) versus samples that have not been modified by the AA additive.

**Summary of Results**

With the addition of the alkoxy amine additive, the melt index decreases, the Mw/Mn ratio increases, the low shear viscosity increases, the low to high shear viscosity ratio increases, the tan delta decreases, and the melt strength increases, as compared to the initial polymer without the additive.

In this invention, compositions with the "oxy amine"-containing compound showed a 5 to 20 % increase in melt strength compared to a similar composition with no "oxy amine"-containing compound.

In this invention, compositions with the "oxy amine"-containing compound showed a 4 to 131 % increase in low shear viscosity, compared to a similar composition with no "oxy amine"-containing compound. The low shear viscosity is the viscosity at 0.1 rad/s.

In this invention, compositions with the "oxy amine"-containing compound showed a 4 to 112 % increase in viscosity ratio (eta* at 0.1 rad/s to eta* at 100 rad/s), compared to a similar composition with no "oxy amine"-containing compound.

In this invention, compositions with the "oxy amine"-containing compound showed a 6 to 48 % decrease in tan delta, compared to a similar composition with no "oxy amine"-containing compound.

In this invention, the compositions with the "oxy amine"-containing compound maintained or exceeded mechanical properties, for example, ESCR, as compared to a similar composition with no "oxy amine"-containing compound.

With the increase in melt strength and/or low shear melt viscosity (η* at 0.1 rad/s), resins made according to the present invention are particularly well suited for fabricated articles, such as films, sheets, pipes or blow molded articles.

## Claims

1. A first composition comprising at least the following:

   A) a first ethylene-based polymer;
   B) one or more antioxidants, present in a total amount greater than 1000 ppm, based on the weight of the first composition; and
   C) an "oxy amine"-containing compound wherein the "oxy amine"-containing compound is selected from the compounds represented by Formula 1:

   $$(R_1)(R_2)N\text{-}O\text{-}R_3 \qquad \text{(Formula 1),}$$

   wherein $R_1$ and $R_2$ are each, independently of one another, a hydrogen, a $C_4$-$C_{42}$ alkyl, a $C_4$-$C_{42}$ aryl, or a substituted hydrocarbon groups comprising O and/or N, and where $R_1$ and $R_2$ may form a ring structure together; and $R_3$ is hydrogen, a hydrocarbon, or a substituted hydrocarbon group comprising O and/or N.

2. The first composition of Claim 1, wherein Component B is present in an amount from "greater than 1000 ppm" to 10,000 ppm, based on the weight of the first composition.

3. The first composition of any of the previous claims, wherein the weight ratio of Component B to Component C is from 10 to 0.1.

4. The first composition of any of the previous claims, wherein Component C is present in an amount from 1 to 900 ppm, based on the weight of the first composition.

5. The first composition of any of the previous claims, wherein the "oxy amine"-containing compound is a hydroxyl amine ester.

6. The first composition of Claim 5, wherein the hydroxyl amine ester is "[9-(acetyloxy)-3,8,10-triethyl-7,8,10-trimethyl-1,5-dioxa-9-azaspiro[5.5]undec-3-yl]methyl octadecanoate."

7. The first composition of any of the previous claims, wherein the ethylene-based polymer of Component A has a density greater than 0.94 g/$cm^3$.

8. The first composition of any of the previous claims, wherein the ethylene-based polymer of Component A has a melt index ($I_2$) from 0.05 to 10 g/10 min.

9. A second composition comprising the first composition of any of the previous claims, and a second ethylene-based polymer.

10. The second composition of Claim 9, wherein the second ethylene-based polymer is the same as the first ethylene-based polymer.

11. The second composition of Claim 9 or Claim 10, wherein Component C is present in an amount less than 900 ppm, based on the weight of the second composition.

12. The composition of any of the previous claims, wherein the composition has melt strength of at least 5 percent greater than the melt strength of a similar composition that does not contain Component C, the "oxy amine"-containing compound.

13. The composition of any of the previous claims, wherein the composition has a viscosity at 0.1 radians/s, measured at 190°C, at least 3 percent greater than the viscosity at 0.1 radians/s, measured at 190°C, of a similar composition that does not contain Component C, the "oxy amine"-containing compound.

**14.** An article comprising at least one component formed from a composition of any of the previous claims

**Patentansprüche**

**1.** Eine erste Zusammensetzung, beinhaltend mindestens Folgendes:

A) ein erstes Polymer auf Ethylenbasis;
B) ein oder mehrere Antioxidantien, vorliegend in einer Gesamtmenge von mehr als 1000 ppm, bezogen auf das Gewicht der ersten Zusammensetzung; und
C) eine "Oxyamin" enthaltende Verbindung, wobei die "Oxyamin" enthaltende Verbindung aus den durch Formel 1 dargestellten Verbindungen ausgewählt ist:

$$(R_1)(R_2)N\text{-}O\text{-}R_3 \qquad \text{(Formel 1)},$$

wobei $R_1$ und $R_2$ jeweils unabhängig voneinander ein Wasserstoff, ein $C_4$-$C_{42}$-Alkyl, ein $C_4$-$C_{42}$-Aryl oder eine O und/oder N beinhaltende substituierte Kohlenwasserstoffgruppe sind, und wobei $R_1$ und $R_2$ gemeinsam eine Ringstruktur bilden können; und $R_3$ Wasserstoff, ein Kohlenwasserstoff oder eine O und/oder N beinhaltende substituierte Kohlenwasserstoffgruppe ist.

**2.** Erste Zusammensetzung gemäß Anspruch 1, wobei Komponente B in einer Menge von "mehr als 1000 ppm" bis 10.000 ppm, bezogen auf das Gewicht der ersten Zusammensetzung, vorliegt.

**3.** Erste Zusammensetzung gemäß einem der vorhergehenden Ansprüche, wobei das Gewichtsverhältnis von Komponente B zu Komponente C 10 bis 0,1 beträgt.

**4.** Erste Zusammensetzung gemäß einem der vorhergehenden Ansprüche, wobei Komponente C in einer Menge von 1 bis 900 ppm, bezogen auf das Gewicht der ersten Zusammensetzung, vorliegt.

**5.** Erste Zusammensetzung gemäß einem der vorhergehenden Ansprüche, wobei die "Oxyamin" enthaltende Verbindung ein Hydroxylaminester ist.

**6.** Erste Zusammensetzung gemäß Anspruch 5, wobei der Hydroxylaminester "[9-(Acetyloxy)-3,8,10-triethyl-7,8,10-trimethyl-1,5-dioxa-9-azaspiro[5.5]undec-3-yl]methyloctadecanoat" ist.

**7.** Erste Zusammensetzung gemäß einem der vorhergehenden Ansprüche, wobei das Polymer auf Ethylenbasis von Komponente A eine Dichte von mehr als 0,94 $g/cm^3$ aufweist.

**8.** Erste Zusammensetzung gemäß einem der vorhergehenden Ansprüche, wobei das Polymer auf Ethylenbasis von Komponente A einen Schmelzindex ($I_2$) von 0,05 bis 10 g/10 min aufweist.

**9.** Eine zweite Zusammensetzung, beinhaltend die erste Zusammensetzung gemäß einem der vorhergehenden Ansprüche und ein zweites Polymer auf Ethylenbasis.

**10.** Zweite Zusammensetzung gemäß Anspruch 9, wobei das zweite Polymer auf Ethylenbasis dasselbe ist wie das erste Polymer auf Ethylenbasis.

**11.** Zweite Zusammensetzung gemäß Anspruch 9 oder Anspruch 10, wobei Komponente C in einer Menge von weniger als 900 ppm, bezogen auf das Gewicht der zweiten Zusammensetzung, vorliegt.

**12.** Zusammensetzung gemäß einem der vorhergehenden Ansprüche, wobei die Zusammensetzung eine Schmelzfestigkeit aufweist, die um mindestens 5 Prozent größer ist als die Schmelzfestigkeit einer ähnlichen Zusammensetzung, die Komponente C, die "Oxyamin" enthaltende Verbindung, nicht enthält.

**13.** Zusammensetzung gemäß einem der vorhergehenden Ansprüche, wobei die Zusammensetzung eine Viskosität bei 0,1 rad/s, gemessen bei 190 °C, aufweist, die um mindestens 3 Prozent größer ist als die Viskosität bei 0,1 rad/s, gemessen bei 190 °C, einer ähnlichen Zusammensetzung, die Komponente C, die "Oxyamin" enthaltende Verbindung, nicht enthält.

**14.** Ein Artikel, beinhaltend mindestens eine Komponente, die aus einer Zusammensetzung gemäß einem der vorhergehenden Ansprüche gebildet ist.

## Revendications

**1.** Une première composition comprenant au moins ce qui suit :

A) un premier polymère à base d'éthylène ;
B) un ou plusieurs antioxydants, présents dans une quantité totale supérieure à 1 000 ppm, rapporté au poids de la première composition ; et
C) un composé contenant de l'« oxy amine », le composé contenant de l'« oxy amine » étant sélectionné parmi les composés représentés par la Formule 1 :

$$(R_1)(R_2)N\text{-}O\text{-}R_3 \qquad \text{(Formule 1)},$$

dans laquelle $R_1$ et $R_2$ sont chacun, indépendamment l'un de l'autre, un hydrogène, un alkyle en $C_4$-$C_{42}$, un aryle en $C_4$-$C_{42}$, ou un groupe hydrocarbure substitué comprenant O et/ou N, et où $R_1$ et $R_2$ peuvent former une structure cyclique ensemble ; et $R_3$ est l'hydrogène, un hydrocarbure, ou un groupe hydrocarbure substitué comprenant O et/ou N.

**2.** La première composition de la revendication 1, dans laquelle le composant B est présent dans une quantité allant de « supérieure à 1 000 ppm » à 10 000 ppm, rapporté au poids de la première composition.

**3.** La première composition de n'importe lesquelles des revendications précédentes, dans laquelle le rapport en poids du composant B au composant C va de 10 à 0,1.

**4.** La première composition de n'importe lesquelles des revendications précédentes, dans laquelle le composant C est présent dans une quantité allant de 1 à 900 ppm, rapporté au poids de la première composition.

**5.** La première composition de n'importe lesquelles des revendications précédentes, dans laquelle le composé contenant de l'« oxy amine » est un ester d'hydroxylamine.

**6.** La première composition de la revendication 5, dans laquelle l'ester d'hydroxylamine est l'« octadécanoate de [9-(acétyloxy)-3,8,10-triéthyl-7,8,10-triméthyl-1,5-dioxa-9-azaspiro[5.5]undéc-3-yl]méthyle. »

**7.** La première composition de n'importe lesquelles des revendications précédentes, dans laquelle le polymère à base d'éthylène du composant A a une masse volumique supérieure à 0,94 g/$cm^3$.

**8.** La première composition de n'importe lesquelles des revendications précédentes, dans laquelle le polymère à base d'éthylène du composant A a un indice de fluidité à l'état fondu ($I_2$) allant de 0,05 à 10 g/10 min.

**9.** Une deuxième composition comprenant la première composition de n'importe lesquelles des revendications précédentes, et un deuxième polymère à base d'éthylène.

**10.** La deuxième composition de la revendication 9, dans laquelle le deuxième polymère à base d'éthylène est le même que le premier polymère à base d'éthylène.

**11.** La deuxième composition de la revendication 9 ou de la revendication 10, dans laquelle le composant C est présent dans une quantité inférieure à 900 ppm, rapporté au poids de la deuxième composition.

**12.** La composition de n'importe lesquelles des revendications précédentes, la composition ayant une résistance à l'état fondu supérieure de 5 pour cent au moins à la résistance à l'état fondu d'une composition similaire qui ne contient pas le composant C, le composé contenant de l'« oxy amine ».

**13.** La composition de n'importe lesquelles des revendications précédentes, la composition ayant une viscosité à 0,1 radian/s, mesurée à 190 °C, supérieure de 3 pour cent au moins à la viscosité à 0,1 radian/s, mesurée à 190 °C, d'une composition similaire qui ne contient pas le composant C, le composé contenant de l'« oxy amine ».

**14.** Un article comprenant au moins un composant formé à partir d'une composition de n'importe lesquelles des revendications précédentes.

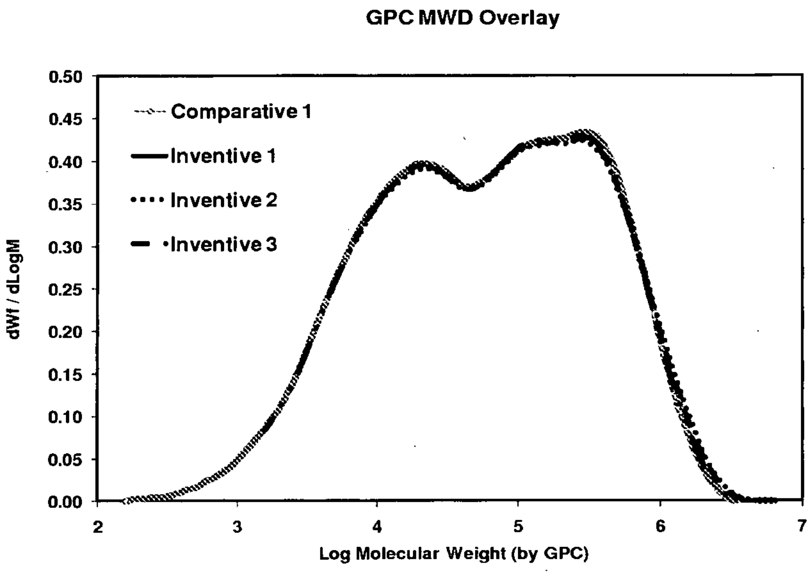


FIGURE 1

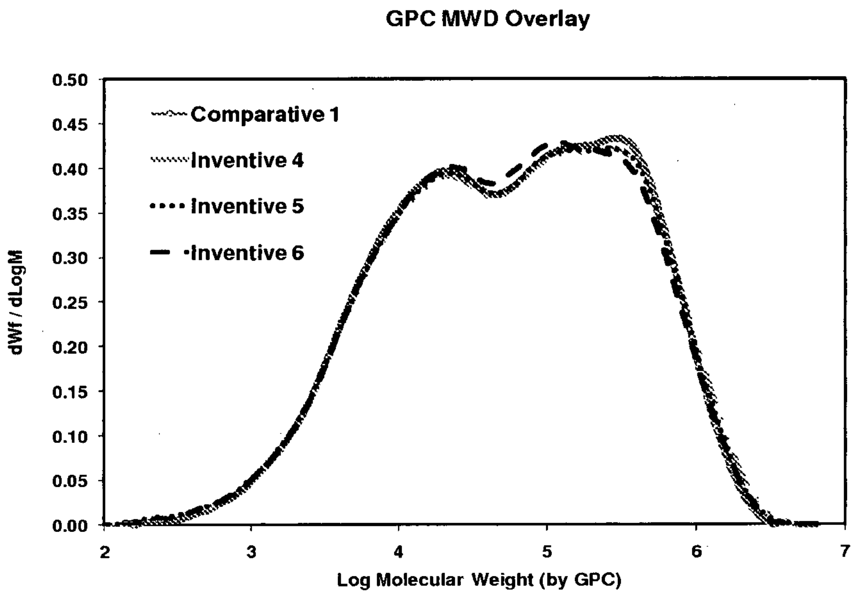


FIGURE 2

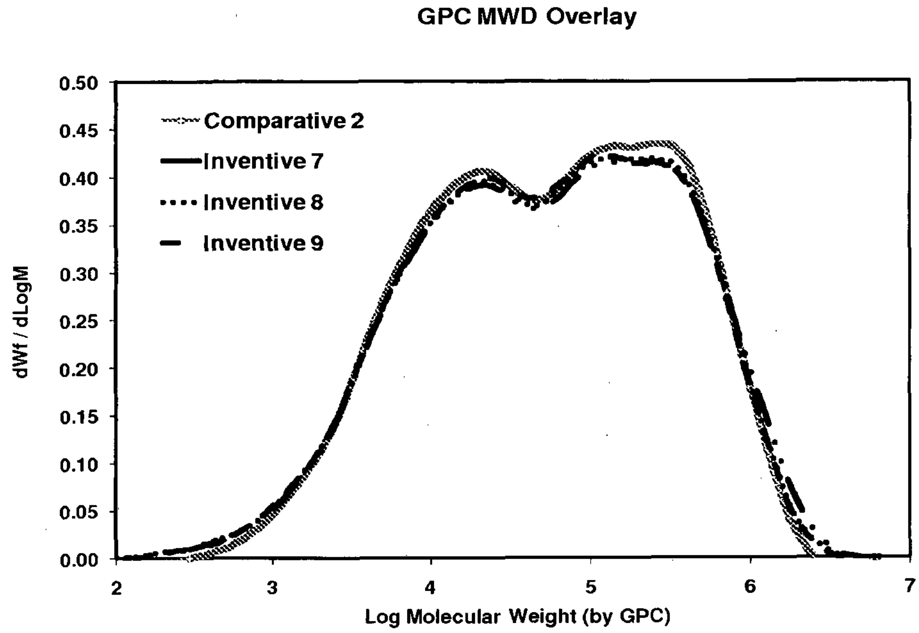


FIGURE 3

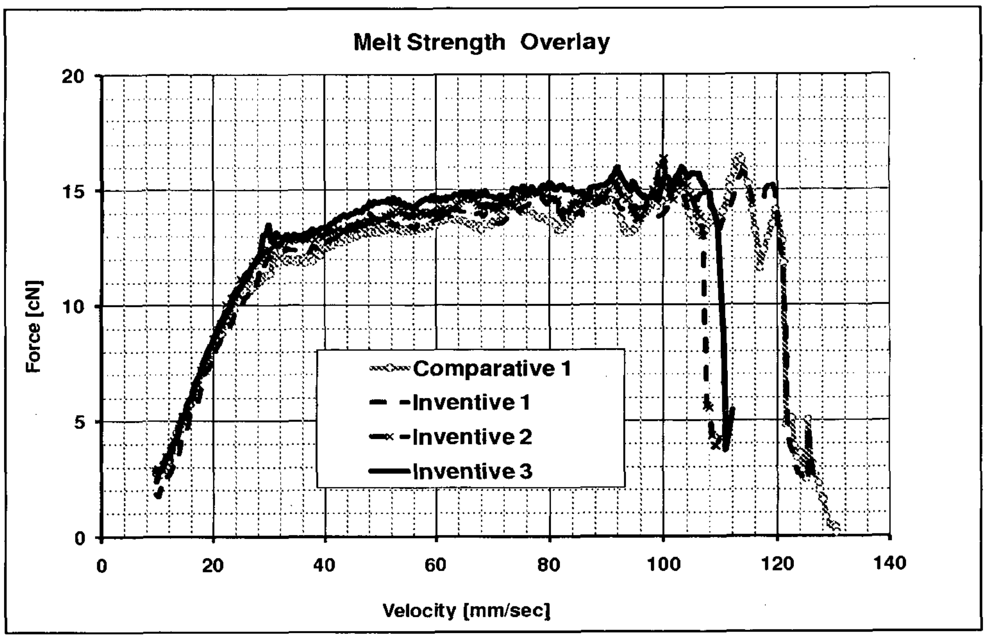


FIGURE 4

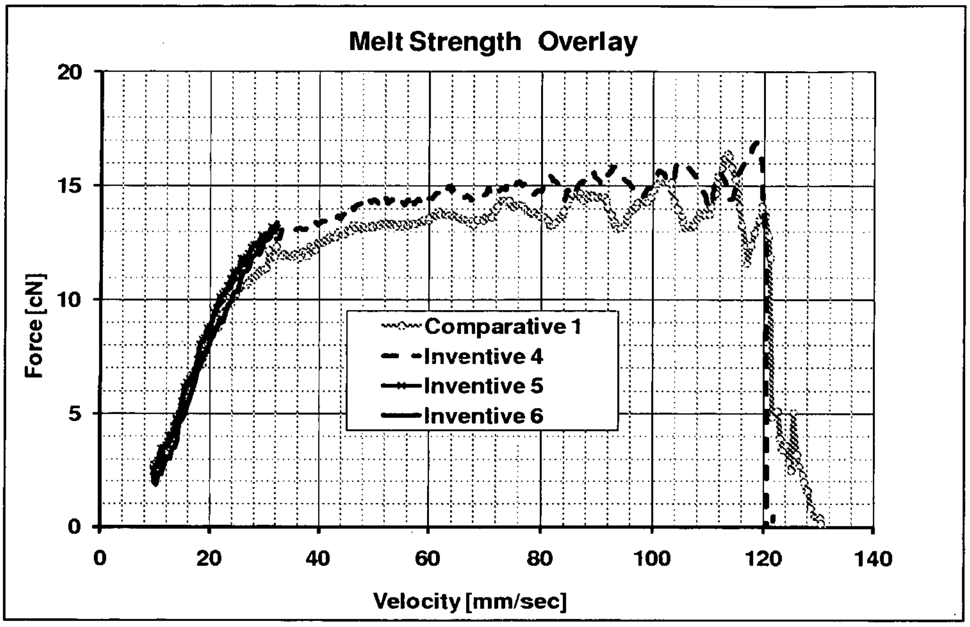


FIGURE 5

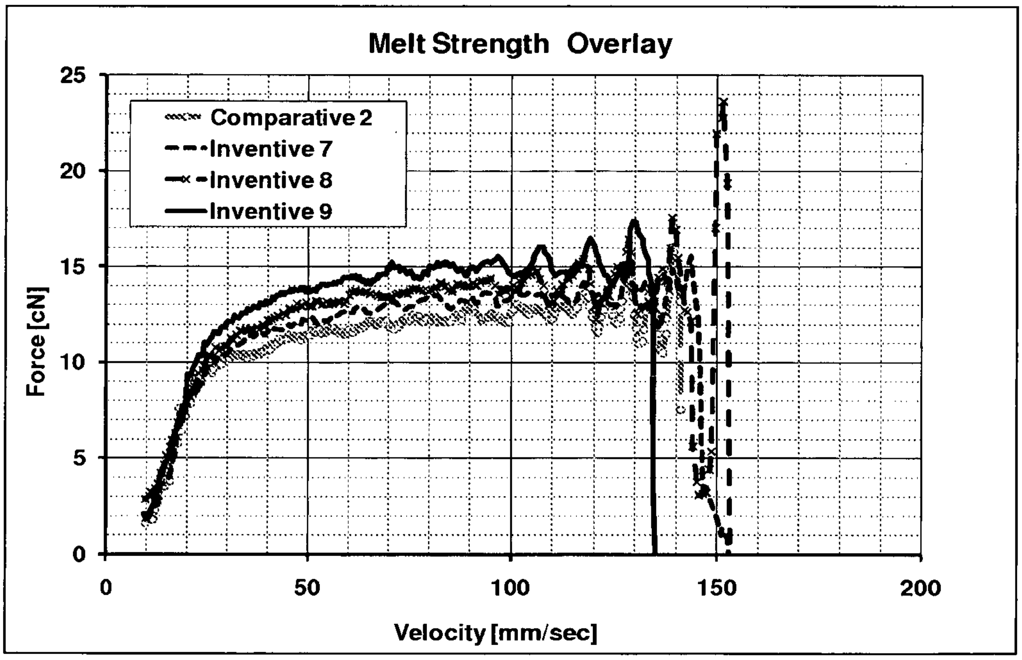


FIGURE 6

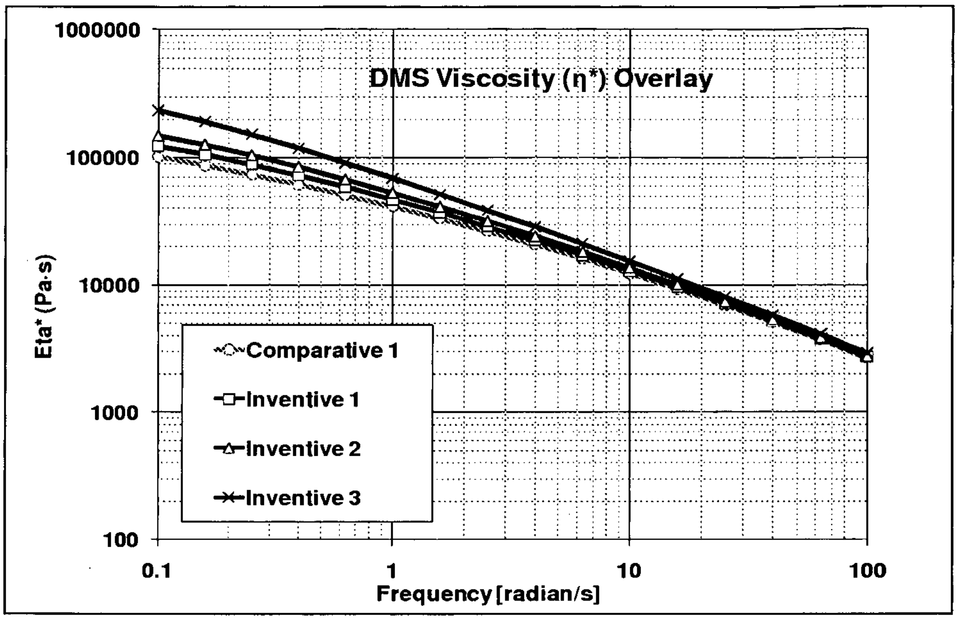


FIGURE 7

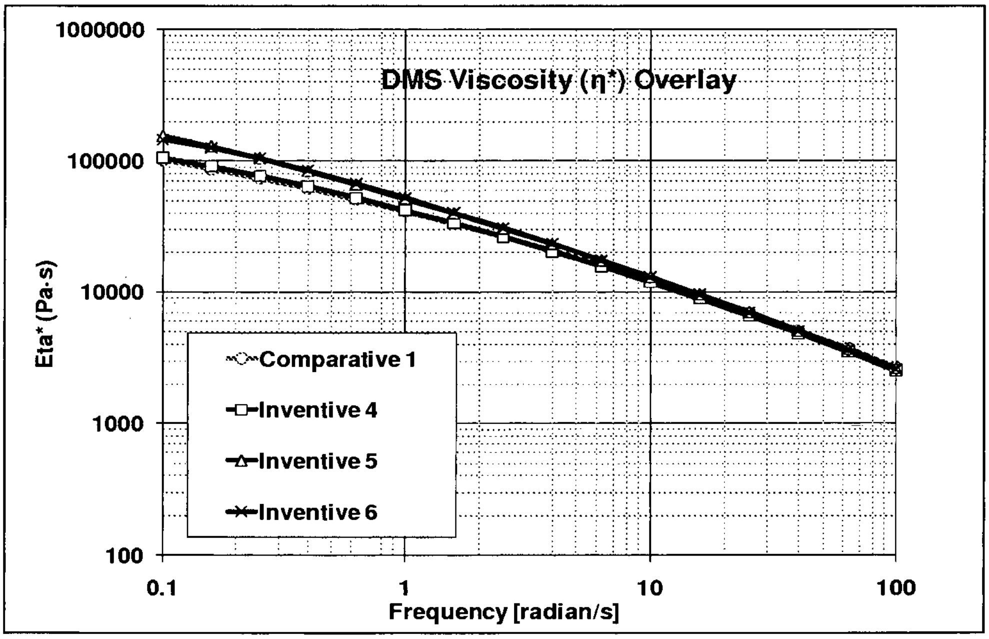


FIGURE 8

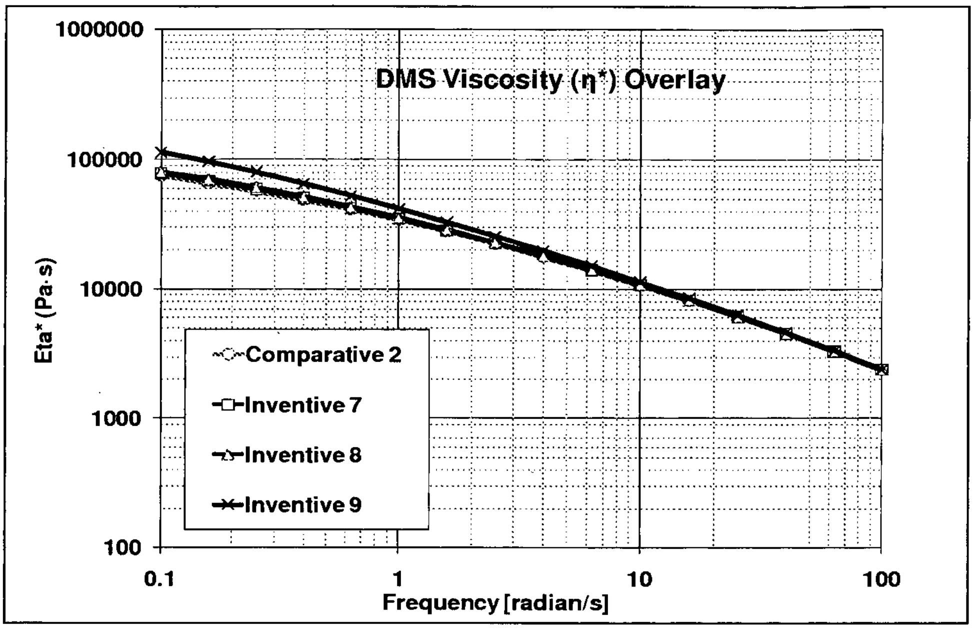


FIGURE 9

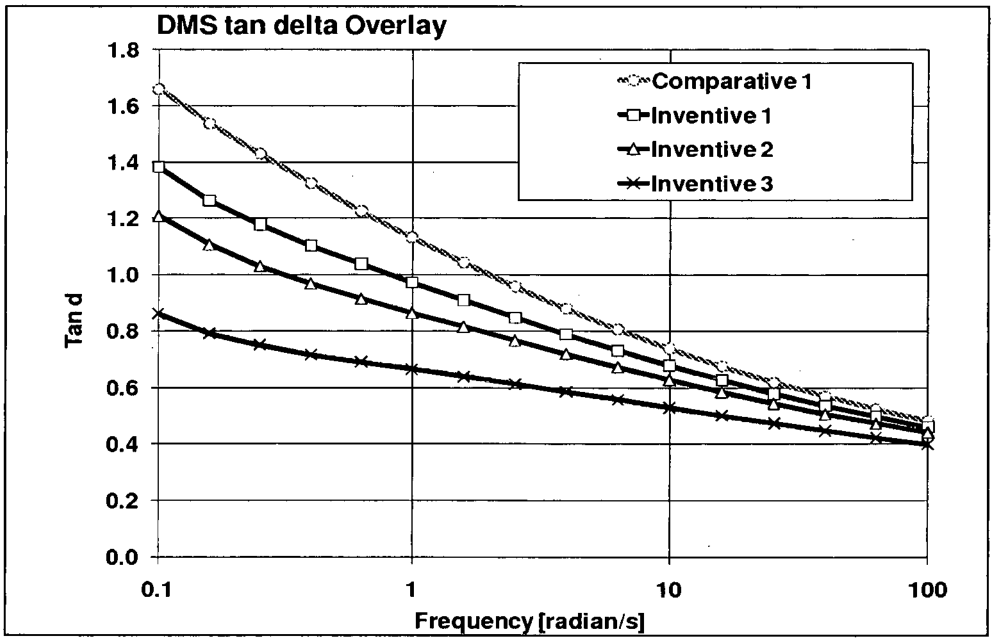


FIGURE 10

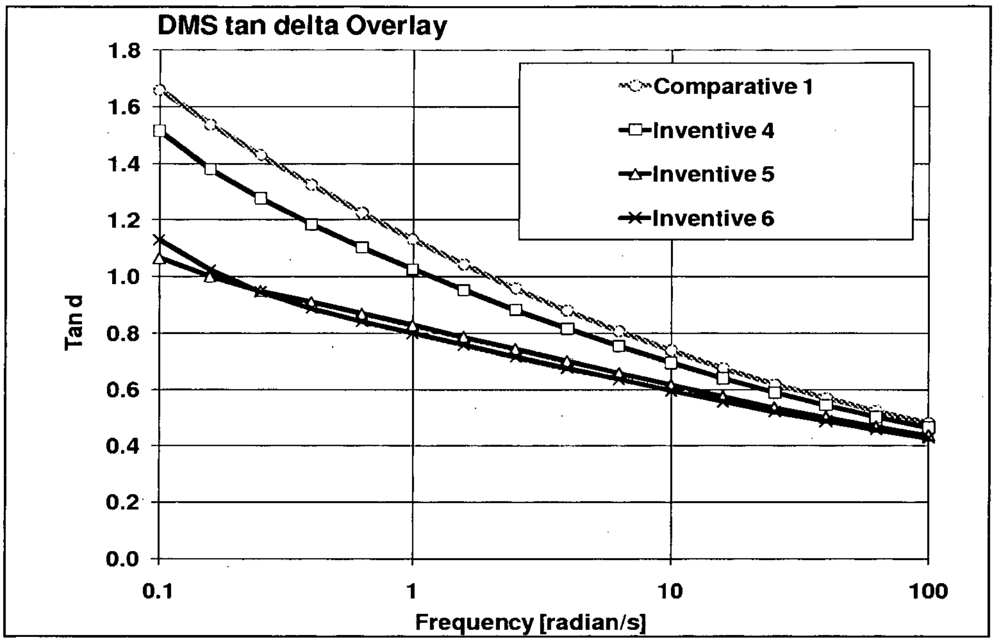


FIGURE 11

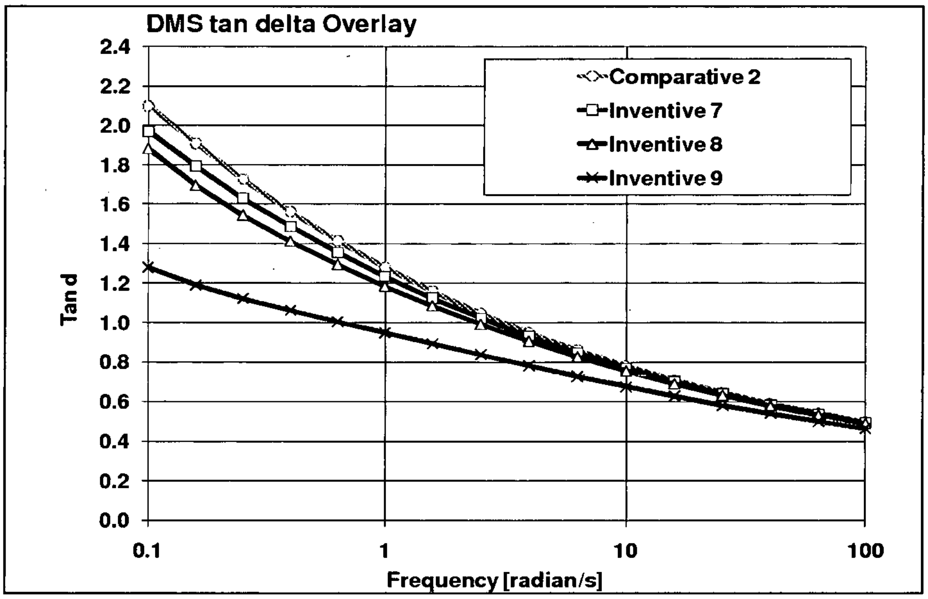


FIGURE 12

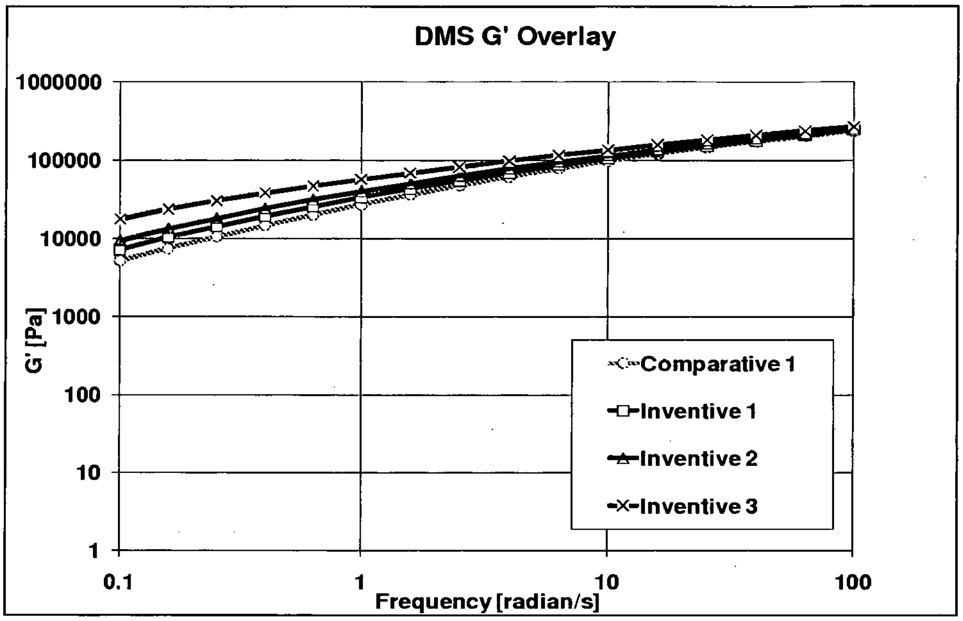


FIGURE 13

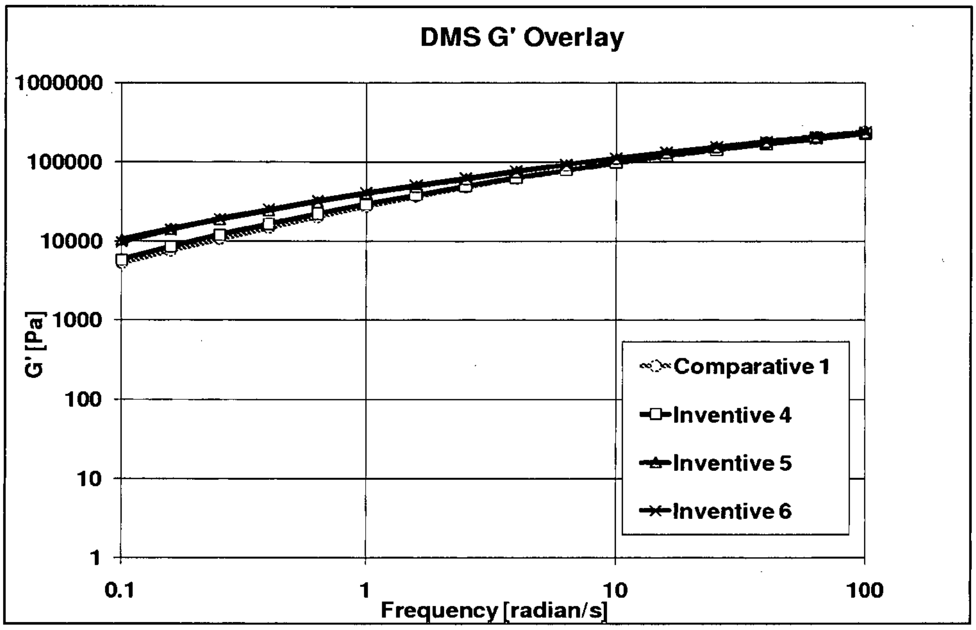


FIGURE 14

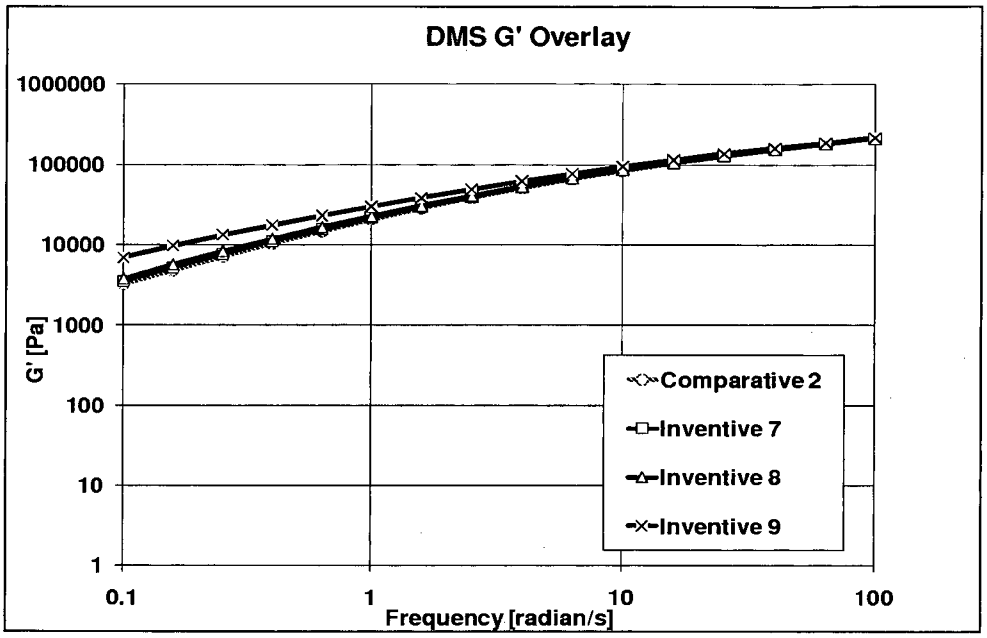
DMS G' Overlay
1000000
100000
10000
1000
100
10
1
G' [Pa]
0.1
1
10
100
Frequency [radian/s]
Comparative 2
Inventive 7
Inventive 8
Inventive 9

FIGURE 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110171407 A
- WO 2011085371 A
- US 20080146740 A
- WO 02062885 A
- JP 2004538340 A

### Non-patent literature cited in the description


- **R. SCAFFARO et al.** *Polymer Degradation and Stability,* 2006, vol. 91, 3110-3116
- **R. SCAFFARO et al.** *European Polymer Journal,* 2007, vol. 43, 2947-2955
- **F.P. LA MANTIA.** *Macromolecular Materials and Engineering,* 2005, vol. 290, 970-975
- **F.P. LA MANTIA.** *Macromolecular Rapid Communications,* 2005, vol. 26, 361-364
- Handbuch der Kunststoftextrusion. 1989, vol. 1, 3-7
- Extrusionsanlagen. HANDBUCH DER KUNSTSTOFTEXTRUSION. 1986, vol. 2
- **WILLIAMS ; WARD.** *J. Polym. Sci., Polym. Let.,* 1968, vol. 6, 621